(19) Europäisches Patentamt
European Patent Office
Office européen des brevets

(11) Numéro de publication : **0 295 173 B1**

# (12) FASCICULE DE BREVET EUROPEEN

(45) Date de publication du fascicule du brevet : **01.04.92 Bulletin 92/14**

(51) Int. Cl.[5] : **G05D 21/02,** C01B 17/04

(21) Numéro de dépôt : **88401318.6**

(22) Date de dépôt : **31.05.88**

**(54) Dispositif de régulation du fonctionnement d'une installation de traitements chimiques, pour améliorer le rendement par atténuation des variances des paramètres de réglage.**

(30) Priorité : **02.06.87 FR 8707693**

(43) Date de publication de la demande : **14.12.88 Bulletin 88/50**

(45) Mention de la délivrance du brevet : **01.04.92 Bulletin 92/14**

(84) Etats contractants désignés : **BE DE ES GB IT NL SE**

(56) Documents cités :
**FR-A- 2 260 531**
**FR-A- 2 262 346**
**FR-A- 2 426 934**
**DIGITAL COMPUTER APPLICATIONS TO PROCESS CONTROL; PROCEEDING OF THE 2nd INTERNATIONAL CONFERENCE, 5-9 juin 1967, Pittsburg, pages 41-54, Instrument Society of America; M. CARMASSI et al.: "New developments in the optimization of a sulphur recovery plant"**

(73) Titulaire : **SOCIETE NATIONALE ELF AQUITAINE (PRODUCTION)**
**Tour Elf, 2, Place de la Coupole, La Défense 6**
**F-92400 Courbevoie (FR)**

(72) Inventeur : **Maurice, Jacques**
**103, Avenue Trespoey**
**F-64000 Pau (FR)**
Inventeur : **Butte, Gérard**
**8, Allée Berlioz**
**F-64150 Mourenx (FR)**
Inventeur : **Vignau, Alain**
**13, rue de la Ribère**
**F-64800 Beuste (FR)**
Inventeur : **Albertini, Marc**
**64, Avenue Maréchal Leclerc**
**F-64000 Pau (FR)**

(74) Mandataire : **Mongrédien, André et al**
**c/o SOCIETE DE PROTECTION DES INVENTIONS 25, rue de Ponthieu**
**F-75008 Paris (FR)**

**EP 0 295 173 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un dispositif de régulation du fonctionnement d'une installation de traitements chimiques, pour améliorer le rendement par atténuation des variances des paramètres de réglage. Elle s'applique à toute installation de traitement chimique qui reçoit des composés chimiques réactifs en entrée pour fournir en sortie au moins un élément chimique présent dans les composés d'entrée, le fonctionnement de l'installation devant présenter le meilleur rendement pour des conditions de fonctionnement données.

Cette invention s'applique notamment à une installation d'obtention de soufre par la réaction de gaz hydrogène sulfuré $H_2S$, avec l'oxygène de l'air.

On sait que la régulation du fonctionnement d'une installation de traitements chimiques est généralement obtenue par un asservissement utilisant les valeurs de paramètres fournis par des capteurs caractéristiques du ou des éléments ou composés obtenus à la sortie de l'installation. Ces valeurs permettent de réguler le fonctionnement de l'installation, grâce à des moyens de régulation auxquels est appliqué un signal de consigne, ainsi que des signaux correspondants à certains des paramètres (par exemple les teneurs des composés résiduels en sortie de l'installation). Ces moyens de régulation fournissent un signal de commande permettant notamment de commander des moyens de réglage de débits des composés introduits dans l'installation.

Ce type de régulation bien connu dans l'état de la technique, utilise au moins une boucle de régulation et présente des inconvénients qui résultent du fait que les valeurs des paramètres fournies par les capteurs sont des valeurs approchées de ces paramètres caractéristiques et non pas des valeurs très exactes. Il en résulte qu'un dispositif de régulation fonctionnant directement à partir des valeurs de paramètres caractéristiques fournies par des capteurs, ne permet pas, d'obtenir une consigne optimum de régulation pour que l'installation de traitements chimiques fonctionne avec un rendement optimum.

C'est le cas par exemple d'une installation de traitement permettant d'obtenir du soufre à partir de la réaction de l'hydrogène sulfuré $H_2S$ et de l'oxygène de l'air, suivant la réaction bien connue de CLAUS, telle que décrite par exemple dans le document FR-A-22/EC 531.

Ce type d'installation comprend des moyens de traitements chimiques qui comportent notamment, à l'entrée de celle-ci, un four relié à des moyens à débits réglables. Ces moyens permettent d'injecter dans le four, des composés chimiques réactifs d'entrée constitués essentiellement par de l'hydrogène sulfuré $H_2S$ et de l'air dont l'oxygène réagit avec une partie de l'hydrogène sulfuré selon la réaction :

$$H_2S + \frac{3}{2}O_2 \longrightarrow SO_2 + H_2O$$

A la sortie du four, les produits de réaction sont introduits dans un ou plusieurs convertisseurs contenant des catalyseurs permettant grâce à la réaction dite de "CLAUS", de faire réagir l'anhydride sulfureux $SO_2$ produit, sur l'hydrogène sulfuré. Cette réaction est la suivante :

$$2H_2S + SO_2 \longrightarrow 3S\downarrow + 2H_2O\uparrow$$

Le soufre est donc disponible à la sortie des convertisseurs et la réaction totale s'écrit :

$$3H_2S + \frac{3}{2}O_2 \longrightarrow 3S\downarrow + 3H_2O\uparrow$$

L'eau produite est éliminée sous forme de vapeur et les gaz résiduels des composés réactifs d'entrée peuvent être encore partiellement éliminés grâce à une unité de traitement catalytique complémentaire, telle que celle utilisée dans le procédé catalytique "sulfreen" ou tout autre procédé.

Dans cet exemple d'installation de traitements chimiques, la régulation du fonctionnement de l'installation dite "usine à soufre", se fait en agissant sur le débit d'air de combustion introduit à l'entrée du four.

De manière connue dans l'état de la technique, la régulation de ce type d'installation s'effectue de la manière suivante : on mesure grâce à des capteurs constitués essentiellement par un analyseur de concentration, les teneurs des composants réactifs résiduels d'entrée qui sont encore présents à la sortie de l'installation. Ces composants sont essentiellement, dans l'exemple considéré, l'hydrogène sulfuré $H_2S$ et l'anhydride sulfureux $SO_2$. Pour que l'installation fonctionne à son meilleur rendement, il est nécessaire que ces teneurs soient aussi voisines que possible de 0. Les valeurs de ces teneurs sont appliquées à des moyens de régulation qui reçoivent également un signal de consigne. Ces moyens de régulation fournissent un signal de commande d'une électrovanne de réglage du débit d'air injecté à l'entrée de l'installation.

Le signal de consigne appliqué au moyen de régulation permet théoriquement, grâce à une alimentation en air supplémentaire à l'entrée de l'installation, de ramener à une valeur nulle les teneurs en gaz sulfureux $H_2S$ et en anhydride sulfureux $SO_2$, présents à la sortie de l'installation. Ce signal de consigne dépend bien entendu des teneurs de ces gaz résiduels mesurées par les moyens d'analyse (analyseur chromatograhique par exemple), disposés en sortie de l'installation. Toutefois, les valeurs de ces teneurs sont mesurées approximativement et dans ce type d'installation connu, le signal de consigne appliqué au moyen de régulation ne permet pas de faire varier avec une grande précision le débit d'air injecté à l'entrée de l'installation, pour qu'en sortie de celle-ci les teneurs en gaz résiduels, tendent vers des valeurs nulles. De plus, la seule mesure des teneurs en gaz résiduels en sortie de l'installation, ne sont pas des paramètres suffisants pour permettre de réguler celle-ci à son rendement maximum. Enfin, bien que généralement on mesure les débits des composants réactifs introduits à l'entrée de l'installation, les valeurs de ces débits ne sont pas prises en compte pour la régulation.

L'invention a pour but de remédier aux inconvénients des dispositifs connus de régulation du fonctionnement d'une installation de traitements chimiques, notamment par la prise en compte des valeurs d'un grand nombre de paramètres, et par un calcul correctif des valeurs de ces paramètres, de manière à permettre la régulation du fonctionnement de l'installation à un rendement maximal. Ce calcul correctif est en fait un calcul de cohérence des valeurs des paramètres mesurés.

L'invention a pour objet un dispositif de régulation du fonctionnement d'une installation de traitements chimiques, pour améliorer le rendement par atténuation des variances des paramètres de reglage, cette installation comprenant des moyens de traitements chimiques reliés à des moyens à débit réglables alimentant respectivement les moyens de traitements chimiques par des composés chimiques réactifs d'entrée, cette installation fournissant en sortie au moins un élément chimique présent dans les composés d'entrée, le dispositif de régulation comportant

– des moyens de mesure des débits des composés d'entrée.

– des moyens de mesure des teneurs des composés d'entrée encore présents en sortie des moyens de traitements chimiques (composés résiduels)

– des moyens de régulation de débit reliés aux moyens de mesure des teneurs des composés résiduels et à au moins l'un des moyens à débit réglable, ces moyens de régulation de débit recevant un signal de consigne pour appliquer aux moyens à débit réglables un signal modifiant le débit du composé d'entrée correspondant, de façon à faire tendre vers des valeurs nulles les teneurs des composés résiduels, caractérisé en ce qu'il comporte des moyens de calcul reliés aux moyens de mesure de débit des composés d'entrés, aux moyens de mesure de teneur des composés résiduels et a des moyens de calcul effectuant des traitements de cohérence des valeurs de mesures de débit et de teneur atténuant les variances de ces débits et teneurs, les moyens de calcul fournissant sur une sortie le signal de consigne amélioré par le traitement de cohérence et appliqué aux moyens de régulation.

Selon un premier mode de réalisation de l'invention, les moyens de régulation comprennent un régulateur de débit fournissant sur une sortie un signal corrigé de commande d'une électrovanne des moyens réglables.

Selon un autre mode de réalisation de l'invention, les moyens de régulation comprennent un régulateur de débit dont une sortie fournit un signal de commande d'une électrovanne des moyens réglables, et un additionneur relié par une entrée à la sortie du régulateur, une autre entrée de cet additionneur étant reliée à la sortie des moyens de calculs pour recevoir le signal de consigne, une sortie de cet additionneur fournissant un signal corrigé de commande d'une électrovanne des moyens à débits réglables.

Enfin, selon une autre caractéristique, les composés réactifs d'entrée sont du gaz acide sulfureux et de l'air, l'élément en sortie étant du soufre.

Les caractéristiques et avantages de l'invention ressortiront mieux de la description qui va suivre donnée en référence à la figure unique annexée. Cette figure représente schématiquement un dispositif conforme à l'invention, pour la régulation du fonctionnement d'une installation de traitements chimiques à un rendement maximal.

Le dispositif de régulation 1 permet de réguler le fonctionnement d'une installation 2, pour améliorer le rendement, par atténuation des variances des paramètres de réglage.

L'installation 2 comprend des moyens 3 de traitements chimiques, reliés à des moyens 4 à débits réglables alimentant respectivement les moyens de traitements chimiques 3, par des composés réactifs d'entrée. Ces composés réactifs sont appliqués à des conduits 5, 6, 7 des moyens de réglage de débit 4, qui seront décrits

plus loin en détail. Cette installation fournit en sortie 8 au moins un élément chimique présent dans les composés d'entrée.

Dans le cas où le dispositif est utilisé dans une installation qui permet d'obtenir du soufre à partir des réactions décrites plus haut, l'hydrogène sulfuré $SH_2$ est appliqué par exemple au conduit 5 relié aux moyens de traitements 3 par une vanne ou une électrovanne 9 de réglage de débit.

Le conduit 6 reçoit l'air contenant l'oxygène nécessaire à la réaction. Ce conduit est relié aux moyens de traitements 3 par une vanne ou électrovanne 10 de réglage de débit. Un conduit 7 reçoit également de l'air nécessaire à la réaction. Ce conduit est relié aux moyens de traitements 3 par une vanne ou électrovanne de réglage de débit 11. C'est en fait grâce à cette vanne 11 associée au dispositif de régulation 1, que l'installation fonctionne à son rendement optimum, comme on le verra plus loin en détail. Dans cet exemple, les moyens de traitement 3 comprennent le four et les convertisseurs 12 ainsi que l'unité dite "sulfreen" 13 mentionnés plus haut, et fournissent sur sa sortie 8 du soufre à haut degré de pureté.

Le dispositif de régulation 1 comporte des moyens de mesure 14 des débits des composés réactifs d'entrée. Dans le cas d'une installation d'obtention de soufre, ces moyens de mesure 14 comprennent des débitmètres 15, 16 permettant de mesurer respectivement les débits d'hydrogène sulfuré et d'air injectés dans l'installation.

Le dispositif de régulation comporte aussi des moyens de mesure 17 des teneurs des composés d'entrée qui sont encore présents à la sortie de l'installation et qui sont donc résiduels. Dans le cas d'une installation d'obtention de soufre, les moyens de mesures de teneur des composés résiduels comprennent par exemple deux chromatographes 18, 19, qui permettent de déterminer les teneurs en gaz hydrogène sulfuré dans les composés résiduels de sortie. Ces teneurs sont mesurées à la sortie 20 du dernier convertisseur des moyens de traitements, ainsi qu'à la sortie 8 de l'unité "sulfreen". Les moyens de mesure 17 fournissent des signaux de mesures de ces teneurs sur leurs sorties respectives.

Enfin, le dispositif de régulation comprend des moyens 21 de régulation de débit, reliés aux moyens 17 de mesure de teneur de composés résiduels, ainsi qu'à au moins l'un des moyens 4 à débit réglable. Dans l'exemple d'une installation d'obtention de soufre, les moyens de régulation 21 sont reliés à la vanne 11 permettant de réguler le débit de l'air introduit dans cette installation (Air additionnel de régulation). Les moyens de régulation reçoivent un signal de consigne sur une entrée 22 ; ce signal permet, comme on le verra plus loin en détail, d'appliquer à l'un des moyens 4 à débit réglable (la vanne ou électrovanne 11 dans l'application cosidérée) un signal modifiant le débit du composé d'entrée correspondant (débit d'air dans l'application considérée). Cette modification du débit du composé d'entrée permet de faire tendre vers des valeurs nulles les teneurs des composés résiduels en sortie de l'installation.

Selon l'invention, le dispositif comprend aussi des moyens de calcul 23 reliés aux moyens de mesures 14 des débits des composés d'entrée, aux moyens de mesures 17 des teneurs des composés résiduels en sortie de l'installation, ainsi qu'à des moyens de mesures 24 qui fournissent des signaux de mesures de teneurs des composés d'entrée. Ces moyens de mesures de teneurs des composés d'entrée sont constitués, dans l'application considérée, par un chromatographe permettant de déterminer notamment, dans le gaz acide traité, les teneurs en hydrogène sulfuré $SH_2$, anhydride carbonique $CO_2$, méthane $CH_4$, éthane $C_2H_6$, benzène $C_6H_6$, ... par exemple.

Les moyens de calculs 23 effectuent des traitements de cohérence des valeurs des mesures de débits et de teneurs, reçues des différents moyens de mesures. Les moyens de calculs 23 fournissent sur une sortie 32, le signal de consigne appliqué aux moyens de régulation 21. Les traitements de cohérence effectués par les moyens de calculs 23 seront décrits plus loin en détail.

Les moyens de calculs 23 comprennent par exemple un processeur de traitement 25, relié de manière connue à des moyens de mémorisation 26, à un terminal 27 à clavier et écran, ainsi qu'à une imprimante 28. La mémoire 26 permet notamment d'enregistrer les programmes nécessaires aux traitements de cohérence. Le terminal 27 à écran et clavier permet de dialoguer avec le processeur 25, tandis que l'imprimante 28 permet un enregistrement des résultats des mesures par exemple.

Dans un premier mode de réalisation du dispositif de l'invention, le signal de consigne disponible sur la sortie 24 de moyens de calculs 23 et résultant des traitements de cohérence effectués sur les valeurs des mesures, est appliqué directement à un régulateur de débit 29 ; le signal de sortie de ce régulateur commande directement l'électrovanne 11 qui, dans l'application considérée, permet de réguler le débit d'air en entrée. Ce régulateur 29 reçoit également les signaux de mesures des teneurs des composés résiduels en sortie de l'installation.

Dans un autre mode de réalisation du dispositif de l'invention, les moyens de régulation 21 comprennent, outre le régulateur 29, un additionneur 30 auquel est appliqué le signal de sortie du régulateur 29. Le signal de sortie des moyens de calculs 23 est non plus appliqué à l'entrée 22 de ce régulateur, mais à l'additionneur 30, comme le montre la liaison 31. Une sortie de l'additionneur 30 fournit un signal corrigé de commande de

l'électrovanne des moyens à débits réglables 4.

Le traitement de cohérence va maintenant être expliqué en détail, à partir d'un exemple de calcul :

On considère une conduite qui transporte un fluide incompressible et que sur cette conduite sont installés deux débitmètres massiques A et B.

Le débitmètre A possède un capteur à turbine et le débitmètre B possède un capteur à orifice déprimogène par exemple. Un relevé simultané des deux appareils donne :

Pour le débitmètre A la valeur $m_A = 100$

Pour le débitmètre B la valeur $m_B = 105$.

Dans ces conditions, il y a mesure d'une grandeur unique par des moyens indépendants qui donnent deux valeurs différentes de la valeur vraie de la mesure notée M dans ce qui suit.

Il s'agit de calculer deux valeurs $\hat{m}_A$ et $\hat{m}_B$ plusvoisines de M que ne le sont les valeurs $m_A$ et $m_B$.

Le constructeur de l'appareil A indique qu'il à effectué, sur le débit M, une série de n expériences qui lui ont donné un ensemble $W_A$ de mesures de M.

L'écart-type de l'ensemble $W_A$ est $s_A=2$ par exemple, et sa moyenne est M.

L'ensemble $W_A$ une loi de distribution normale, c'est-à-dire que la densité de probabilité de la loi est, de manière connue :

$$\frac{1}{s_A\sqrt{2\pi}}.e^{-\frac{1}{2}\left(\frac{M-m}{s_A}\right)^2}$$

Le constructeur de l'appareil B indique qu'il a lui aussi réalisé une série de n expériences sur le débit M et qu'il a obtenu l'ensemble $W_B$ des mesures de M.

L'écart-type de l'ensemble $W_B$ est $s_B=4$ par exemple, et sa moyenne est M.

Cet ensemble a également une densité de probabilité :

$$\frac{1}{s_B\sqrt{2\pi}}.e^{-\frac{1}{2}\left(\frac{M-m}{s_B}\right)^2}$$

Dans l'ensemble $W_A$, la probabilité d'obtention d'une valeur $m'_A$ aussi voisine que possible de la valeur $m_A$ a pour expression :

$$\text{Prob}\ (m_A-dm/2<m'_A\leq m_A+dm/2)=\frac{1}{s_A\sqrt{2\pi}}.e^{-\frac{1}{2}\left(\frac{M-m'_A}{s_A}\right)^2}.dm$$

où dm est l'élément differentiel de la variable m.

Dans l'ensemble $W_B$, la probabilité de réalisation d'une valeur $m'_B$ aussi voisine que possible de la valeur $m_B$ a pour expression :

$$\text{Prob}\ (m_B-dm/2<m'_B\leq m_B+dm/2)=\frac{1}{s_B\sqrt{2\pi}}.e^{-\frac{1}{2}\left(\frac{M-m'_B}{s_B}\right)^2}.dm$$

Lorsque deux événements A et B sont indépendants, la probabilité composée de voir se réaliser à la fois A et B a pour expression :

$$\text{Prob}\,(A \cap B) = \text{prob}\,(A) \times \text{prob}\,(B)$$

En effectuant le changement de variables suivant :

$$x_A = \frac{M - m'_A}{s_A}$$

et

$$x_B = \frac{M - m'_B}{s_B}$$

La probabilité de réalisation simultanée dans les ensembles $W_A$ et $W_B$, des valeurs $m'_A$ et $m'_B$ respectivement aussi voisines que possible des valeurs observées $m_A$ et $m_B$, a pour expression :

$$\text{Prob}\left[(m_A - dm/2 < m'_A < m_A + dm/2) \cap (m_B - dm/2 < m'_B < m_B + dm/2)\right] =$$

$$\frac{dm^2}{2\pi . s_A . s_B} . e^{\frac{-x_A^2}{2}} . e^{\frac{-x_B^2}{2}} = \frac{e^{-\frac{\left(x_A^2 + x_B^2\right)}{2}}}{2\pi . s_A . s_B} . dm^2$$

L'examen de l'expression analytique qui quantifie la probabilité cherchée montre, à l'évidence, que la probabilité croît d'une façon monotone lorsque le terme

$$\frac{\left(x_A^2 + x_B^2\right)}{2}$$

décroît.

En d'autres termes : la probabilité d'obtenir simultanément dans les ensembles $W_A$ et $W_B$, les valeurs $m_A$ et $m_B$, est maximum quand le terme

$\frac{X_A^2 + X_B^2}{2}$ est minimum.

Ainsi, lorsque :

$\frac{X_A^2 + X_B^2}{2}$ est minimum, les valeurs les plus probables de $\hat{m}_A$ et de $\hat{m}_B$ recherchées sont :

$$\hat{m}_A = m_A + S_A X_A = M + m_A - m'_A$$
$$\hat{m}_B = m_B + S_B X_B = M + m_B - m'_B$$

Puisque les appareils A et B mesurent une grandeur unique M, il faut rechercher l'égalité des valeur $\hat{m}_A$ et $\hat{m}_B$.

On note $y = \hat{m}_A - \hat{m}_B$ la contrainte logique sur les estimations m. Le problème numérique est alors de calculer simultanément :

$\frac{X_A^2 + X_B^2}{2}$ minimum sous la contrainte y = 0.

Puisque y=0, il est équivalent de minimaliser la fonction auxiliaire

$$z = \frac{X_A^2 + X_B^2}{2} + k.y$$

où k est une nouvelle inconnue du problème.

La fonction z possède un extremum lorsque les dérivées par rapport à $X_A$ et à $X_B$ s'annulent, c'est-à-dire :

$$\frac{\partial z}{\partial x_A} = 0$$

$$\frac{\partial z}{\partial x_B} = 0$$

tous calculs effectués, ces deux équations ont pour expression le système :

$$(1) \quad \begin{cases} X_A + kS_A = 0 \\ X_B - kS_B = 0 \end{cases}$$

Les variables $X_A$ et $X_B$, remplacées dans l'expression de la contrainte ($m_A+S_AX_A=m_B+S_BX_B$), donne alors :

$$kS_A^2 + kS_B^2 = m_A - m_B$$

c'est-à-dire :

$$k = \frac{m_A - m_B}{S_A^2 + S_B^2}$$

La valeur de k reportée dans le système (1) donne :

$$X_A = \frac{-S_A \cdot (m_A - m_B)}{S_A^2 + S_B^2}$$

$$X_B = \frac{S_B \cdot (m_A - m_B)}{S_A^2 + S_B^2}$$

Finalement :

$$\hat{m}_A = m_A - \frac{S_A^2 \cdot (m_A - m_B)}{S_A^2 + S_B^2}$$

$$\hat{m}_B = m_B + \frac{S_B^2 \cdot (m_A - m_B)}{S_A^2 + S_B^2}$$

L'application numérique des résultats précédents est :

$$\hat{m}_A = 100 - \frac{4\,(100 - 105)}{4 + 16} = 100 + 1 = 101$$

$$\hat{m}_B = 105 + \frac{16\,(100 - 105)}{4 + 16} = 105 - 4 = 101$$

La valeur la plus probable (et non pas la valeur certainement la plus voisine) de M est égale à 101.

Les valeurs cohérentes des mesures $\hat{m}_A$ et $\hat{m}_B$ sont :

$$\hat{m}_A = \hat{m}_B = 101$$

La certitude d'obtenir des valeurs m plus voisines de la valeur vraie que ne le sont les valeurs brutes m, est obtenue en multipliant les relevés de mesures brutes et leur traitement.

La réduction de l'erreur est de 50% pour la mesure A et de 66% pour la mesure B dans le cas où la valeur vraie est égale à 102, et l'erreur résiduelle de B change alors de sens.

L'efficacité du traitement augmente avec le nombre de redondances des mesures brutes et avec le nombre de traitements répétés.

Dans l'application considérée du dispositif de régulation de l'invention à une installation d'obtention de soufre, l'expérience montre que le traitement de cohérence effectué sur les valeurs des teneurs et des débits mesurées, permet un fonctionnement de cette installation à un rendement optimum. Dans les installations de l'état de la technique, qui n'utilisent pas ce traitement de cohérence dans ce type d'application, et qui notamment ne traitent pas par cohérence des valeurs de débit des composés réactifs en entrée ainsi que les valeurs des teneurs de ces composés en sortie, le rendement est bien inférieur.

Les traitements de cohérence permettent également de fixer des intervalles de valeurs à l'intérieur desquels les valeurs mesurées doivent être situées. Lorsque les valeurs de l'un des paramètres mesurés, par exemple, ne sont pas situées dans l'intervalle correspondant prédéterminé il est possible de déclencher une alarme qui permet éventuellement d'arrêter le fonctionnement de l'installation puisque dans ces conditions c'est qu'il y a probablement une défaillance dans le fonctionnement de l'installation.

Dans l'application considérée, les traitements de cohérence permettent d'affiner la prédiction du débit d'air nécessaire à la réaction avec les gaz acides d'entrée.

Les traitements de cohérence permettent de diminuer les variances des mesures effectuées et ainsi d'augmenter la stabilité du fonctionnement de toute l'installation. Il en résulte qu'en régime établi de régulation, il n'est plus nécessaire d'effectuer des mesures aussi fréquentes que dans des installations dont la variante de fonctionnement est importante.

Le dispositif de régulation qui vient d'être décrit, notamment pour une installation d'obtention de soufre, peut bien entendu être utilisé pour tout autre type d'installation de traitements chimiques.

## Revendications

1. Dispositif de régulation (1) du fonctionnement d'une installation (2) de traitements chimiques, pour améliorer le rendement par atténuation des variances des paramètres de reglage, cette installation comprenant des moyens (3) de traitements chimiques reliés à des moyens (4) à débit réglables alimentant respectivement les moyens (3) de traitements chimiques par des composés chimiques réactifs d'entrée, cette installation fournissant en sortie (8) au moins un élément chimique présent dans les composés d'entrée, le dispositif de régulation (1) comportant des moyens de mesure (14) des débits des composés d'entrée. des moyens de mesure (17) des teneurs des composés 15 d'entrée encore présents en sortie des moyens de traitements chimiques (composés résiduels) des moyens de régulation (21) de débit reliés aux moyens de mesure (17) des teneurs des composés résiduels et à au moins l'un (11) des moyens (4) à débit règlable, ces moyens de régulation (21) de débit recevant un signal de consigne pour appliquer aux moyens à débit règlables (11) un signal modifiant le débit du composé d'entrée correspondant, de façon à faire tendre vers des valeurs nulles les teneurs des composés résiduels, caractérisé en ce qu'il comporte des moyens de calcul (23) reliés aux moyens de mesure (15), (16) de débit des composés d'entrés, aux moyens de mesure (17) de teneur des composés résiduels et a des moyens de mesure (24) de teneur des composés d'entrée, ces moyens de calcul (23) effectuant des traitements de cohérence des valeurs de mesures de débit et de teneur atténuant les variances de ces débits et teneurs, les moyens de calcul fournissant sur une sortie (32) le signal de consigne amélioré par le traitement de cohérence et appliqué aux moyens de régulation.

2. Dispositif selon la revendication 1, caractérisé en ce que les moyens de régulation (21) comprennent un régulateur (29) de débit fournissant sur une sortie un signal corrigé de commande d'une électrovanne (11) des moyens à débits réglables (4).

3. Dispositif selon la revendication 1, caractérisé en ce que les moyens de régulation (21) comprennent un régulateur (29) de débit dont une sortie fournit un signal de commande d'une électrovanne des moyens réglables, et un additionneur (30) relié par une entrée à la sortie du régulateur (29), une autre entrée de cet additionneur étant reliée à la sortie (32) des moyens de calculs (23) pour recevoir le signal de consigne, une sortie de cet additionneur fournissant un signal corrigé de commande d'une électrovanne (11) des moyens à débits réglables (4).

4. Dispositif selon l'une quelconque des revendications 2 et 3, caractérisé en ce que les composés réactifs d'entrée sont de l'hydrogène sulfuré et de l'air, l'élément en sortie étant du soufre.

## Patentansprüche

1. Vorrichtung zum Regeln (1) der Betriebsweise einer chemischen Behandlungsanlage (2) zur Verbesserung des Wirkungsgrades durch Verminderung der Variationen der Regelparameter, wobei diese Anlage Vorrichtungen (3) zum chemischen Behandeln umfaßt, die mit regelbaren Durchsatzvorrichtungen (4) verbunden sind, die jeweils die chemischen Behandlungsvorrichtungen (3) mit reaktiven chemischen Eingangsverbindungen versorgen, wobei diese Anlage am Ausgang (8) wenigstens ein in den Eingangsverbindungen vorhandenes chemisches Element liefert, wobei die Regelungsvorrichtung (1) umfaßt: Vorrichtungen zum Messen (14) des Durchsatzes der Eingangsverbindungen, Vorrichtungen zum Messen (17) des Gehalts der Eingangsverbindungen, der nach am Ausgang der chemischen Behandlungsvorrichtungen vorhanden ist (residuelle Verbindungen), Vorrichtungen zum Regeln (21) des Durchsatzes, die mit den Meßvorrichtungen (17) für den Gehalt der residuellen Verbindungen und mit wenigstens einer (11) der regelbaren Durchsatzvorrichtungen (4) verbunden sind, wobei diese Durchsatzregelvorrichtungen (21) ein Einstellsignal empfangen, um an die regelbaren Durchsatzvorrichtungen (11) ein Signal anzulegen, das den Durchsatz der entsprechenden Eingangsverbindung so modifiziert, daß der Gehalt der residuellen Verbindungen tendenziell gegen verschwindende Werte gebracht wird, dadurch gekennzeichnet, daß sie Rechnervorrichtungen (23) aufweist, die mit den Meßvorrichtungen (15, 16) für den Durchsatz der Eingangsverbindungen, mit den Meßvorrichtungen (17) für den Gehalt an residuellen Verbindungen und mit Meßvorrichtungen (24) für den Gehalt der Eingangsverbindungen verbunden sind, wobei diese Rechnervorrichtungen (23) eine Kohärenzbearbeitung der Durchsatzmeßwerte und der Gehaltsmeßwerte durchführen, wobei die Varianzen dieser Durchsätze und Gehaltsmeßwerte gedämpft werden, wobei die Rechnervorrichtungen an einem Ausgang (32) das durch die Kohärenzbearbeitung verbesserte und an die Regelvorrichtungen angelegte Einstellsignal erzeugen.

2. Vorrichtung nach Anspruch 1, dadurch gekennzeichnet, daß die Regelvorrichtungen (21) einen Durchsatzregler (29) umfassen, der an einem Ausgang ein korrigiertes Steuerungssignal für ein Elektroventil (11) der regelbaren Durchsatzvorrichtungen (4) liefert.

3. Vorrichtung nach Anspruch 1, dadurch gekennzeichnet, daß die Regelvorrichtungen (21) einen Durchsatzregler (29), von dem ein Ausgang ein korrigiertes Steuerungssignal für ein Elektroventil der Regelvorrichtungen liefert, und einen über einen Eingang mit dem Ausgang des Reglers (29) verbundenen Addierer (30) umfassen, wobei ein weiterer Eingang dieses Addierers mit den Ausgang (32) dieser Rechnervorrichtungen (23) verbunden ist, um das Einstellsignal zu empfangen, wobei ein Ausgang dieses Addierers ein korrigiertes Steuerungssignal für ein Elektroventil (11) der regelbaren Durchsatzvorrichtungen (4) liefert

4. Vorrichtung nach einem der Ansprüche 2 und 3, dadurch gekennzeichnet, daß die reaktiven Eingangsverbindungen Schwefelwasserstoff und Luft sind, wobei das Ausgangselement Schwefel ist.

## Claims

1. Device (1) for regulating the operation of a chemical treatment plant (2) in order to improve the efficiency by reducing variations of the adjustment parameters, said plant comprising chemical treatment means (3) connected to regulatable flow means (4) respectively supplying the chemical treatment means (3) with input reactive chemical compounds, said plant supplying at the output (8) at least one chemical element present in the input compounds, the regulating device (1) incorporating means (14) for measuring the flow rates of the input compounds, means (17) for measuring the contents of the input compounds still present at the output of the chemical treatment means (residual compounds), means (21) for regulating the flow rate connected to the means (17) for measuring the contents of the residual compounds and to at least one (11) of the regulatable flow rate means (21), the latter receiving a set-point signal for application to the regulatable flow rate means (11) of a signal modifying the flow rate of the corresponding input compound, so that the contents of the residual compounds are moved towards zero, characterized in that it incorporates calculating means (23) connected to the flow rate measuring means (15,16) of the input compounds, to the means (17) for measuring the content of the residual compounds and to the means (24) for measuring the content of the input compounds, said calculating means (23) carrying out coherence treatments of the flow rate measurement values and the content reducing the variations of these flow rates and contents, the calculating means supplying on an output (32) the set-point signal improved by the coherence treatment and applied to the regulating means.

2. Device according to claim 1, characterized in that the regulating means (21) comprise a flow regulator (29) providing on an output a corrected control signal of a solenoid valve (11) of the adjustable flow means (4).

3. Device according to claim 1, characterized in that the regulating means (21) comprise a flow regulator (29) one output of which provides a control signal of a solenoid valve of the adjustable means, and an adder (30) connected by an input to the output of the regulator (29), another input of this adder being connected to the output (32) of the calculation means (23) to receive the set-point signal, an output of this adder providing a corrected control signal of a solenoid valve (11) of the adjustable flow means (4).

4. Device according to any one of the claims 2 and 3, characterized in that the input reactive compounds are hydrogen sulfide and air, the element at output being sulfur.

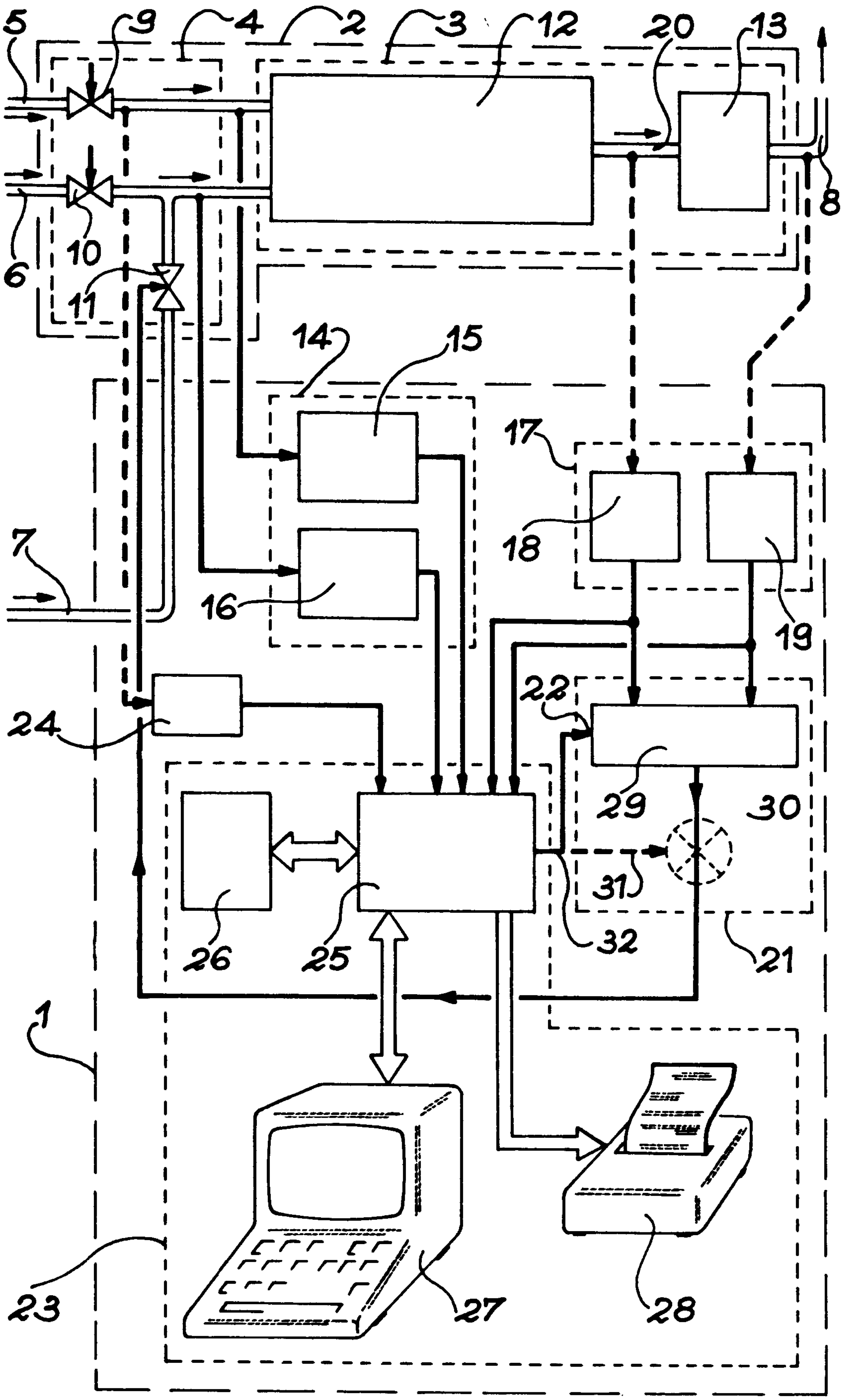
5
9
4
2
3
12
20
13
8
10
6
11
14
15
17
7
18
16
19
22
24
29
30
31
26
25
32
21
1
23
27
28